# FASCICULE DE BREVET EUROPEEN

(11) **EP 1 635 683 B1**
(45) Date de publication et mention de la délivrance du brevet: **01.08.2007**
(21) Numéro de dépôt: 04767303.3
(22) Date de dépôt: 09.06.2004
(51) Int. Cl.: A47J 37/00

(54) **PROCEDE DE CUISSON D'UN ALIMENT PAR COMBUSTION D'ETHANOL DENATURE ET APPAREIL DE MISE EN OEUVRE**
VERFAHREN ZUM KOCHEN VON LEBENSMITTELN MIT BRENNSPIRITUS UND VORRICHTUNG ZUR ANWENDUNG DIESES VERFAHRENS
METHOD FOR COOKING FOOD BY BURNING DENATURED ETHANOL, AND APPLIANCE FOR IMPLEMENTING SAID METHOD

(30) Priorité: 13.06.2003 FR 0307183
(43) Date de publication de la demande: 22.03.2006
(73) Titulaire: Uhrig, Eric, 57800 Ottange (FR); Probst, Laurent, 54510 Tomblaine (FR)
(72) Inventeur: Uhrig, Eric, 57800 Ottange (FR); Probst, Laurent, 54510 Tomblaine (FR)
(74) Mandataire: Poupon, Michel
(86) Numéro de dépôt international: PCT/FR2004/001437
(87) Numéro de publication internationale: WO 2005/002406

(56) Documents cités:
- EP-A- 0 118 157
- EP-A- 0 213 074
- CH-A- 563 758
- FR-A- 2 082 645
- FR-A- 2 270 829
- FR-A- 2 294 672
- US-A- 6 105 485
- "La Préparation de la Viande et des Produits Carnés"[Online] 12 mai 2001 (2001-05-12), XP002269856 Extrait de l'Internet: URL:http://www.viande.ch/warenk_zubereitun g.htm> [extrait le 2004-02-11]

## Description

La présente invention concerne un nouveau procédé de cuisson d'aliments et un appareil pour la mise en oeuvre du procédé.

L'art antérieur connaît déjà de nombreux modes de cuisson des aliments comme par exemple la cuisson dans un récipient qui reçoit la chaleur puis la transmet à l'aliment (une poêle, une casserole...) et la cuisson dans une enceinte, ou un four, soit par rayonnement (gril) ou par conduction d'air chaud.

Ces modes de cuisson nécessitent des quantités importantes d'énergie et des temps relativement longs car les calories se propagent de l'extérieur de l'aliment vers le coeur de celui-ci, à une vitesse relativement lente.

Par ailleurs, la cuisson par rayonnement haute fréquence (micro-ondes) chauffe directement le coeur de l'aliment sans l'intermédiaire du récipient mais elle ne permet pas d'effets de grillade en surface.

Le mode de cuisson au barbecue permet d'obtenir un effet de grillade en surface mais il ne convient pas à tous les types d'aliments. En outre la cuisson des viandes à haute température favorise l'apparition de produits toxiques, tels que les hydrocarbures aromatiques polycyclique (HAP), les benzopyrènes et les amines hétérocycliques (AHC) qui sont respectivement produits dans la partie croustillante de la viande grillée ou dans les fumées dégagées qui contaminent la viande.

Par ailleurs il est connu de transmettre des arômes à l'aliment soit par contact direct avec différentes épices ou aromates, soit par macération, préalablement à la cuisson, dans une marinade alcoolisée et parfumée, soit encore par mijotage dans une sauce en cours de cuisson.

On sait donc que l'alcool est un transmetteur d'arôme à chaud ou à froid.

L'alcool peut également être « flambé » c'est à dire enflammé sur l'aliment mais surtout dans un intérêt esthétique, cette opération n'entraînant pas la cuisson de l'aliment. Dans tous les cas l'alcool employé actuellement en cuisine est un vin ou un liquide alcoolisé type eau de vie, vodka, cognac etc... titrant moins de 50° ou 60° maximum, ou tout alcool ne bénéficiant pas de la taxation réduite en vigueur.

L'art antérieur connaît d'ailleurs le document D5 : Internet page http://www.viande.ch/warenk zubereitung.htm, qui mentionne le flambage comme méthode de préparation culinaire de produits carnés.

Il est également connu du document D6 : FR-A-2 082 645, d'incorporer des essences aromatiques à de l'alcool dénaturé pour masquer le goût désagréable provenant des produits incorporés à l'alcool pour le dénaturer.

Par ailleurs, des récipients ou des appareils pour frire ou rôtir des aliments sont déjà connus des documents D1 : FR-A-2 270 829 ; D2 : US-A-6 105 485 ; D3 : EP-A-0 213 074 ; D4 : EP-A-0 118 157 ; D7 : CH-A-563 758 et D8 FR-A-2 294 672.

L'invention consiste à utiliser l'éthanol pour cuire des aliments par contact direct entre l'aliment et la flamme sans production de dérivés toxiques et consiste en un procédé de cuisson d'un aliment disposé dans un récipient, caractérisé en ce que :
- on verse sur l'aliment un volume V prédéterminé d'éthanol dénaturé par adjonction d'aromates titrant au moins 80°,
- on enflamme l'éthanol et on le laisse brûler en totalité.

L'invention concerne également un appareil selon la revendication 8 conçu pour la mise en oeuvre du procédé, et formé au moins d'un demi tube bouché à chaque extrémité par des demi plaques en forme de demi disques comportant chacune une encoche centrale pour le guidage d'une pique ou de demi piques maintenant les aliments à cuire.

Selon différents modes de réalisation optionnels, l'appareil peut comporter un moyen automatique de rotation de la pique ou des demi piques, et/ou des moyens destinés à .collecter les graisses, et/ou des moyens d'alimentation en continu de l'éthanol de cuisson.

On comprendra mieux l'invention à l'aide de la description ci-après faite en référence aux figures annexées suivantes :
- figure 1 montrant les morceaux d'aliments placés à titre d'exemple non limitatif dans une poêle dans laquelle on verse un volume V d'éthanol,
- figure 2 et 3 montrant l'allumage de l'éthanol et sa combustion,
- figure 4 montrant les aliments cuits après la fin de la combustion,
- figure 5 montrant un mode de réalisation non limitatif d'appareil pour la mise en oeuvre du procédé de cuisson selon l'invention,
- figure 6 montrant, vue en coupe longitudinale et verticale, l'appareil de la figure 5 dans lequel est positionnée une brochette,
- figure 7 montrant, vue en coupe longitudinale et verticale, l'appareil de la figure 5 dans lequel est positionné une saucisse.

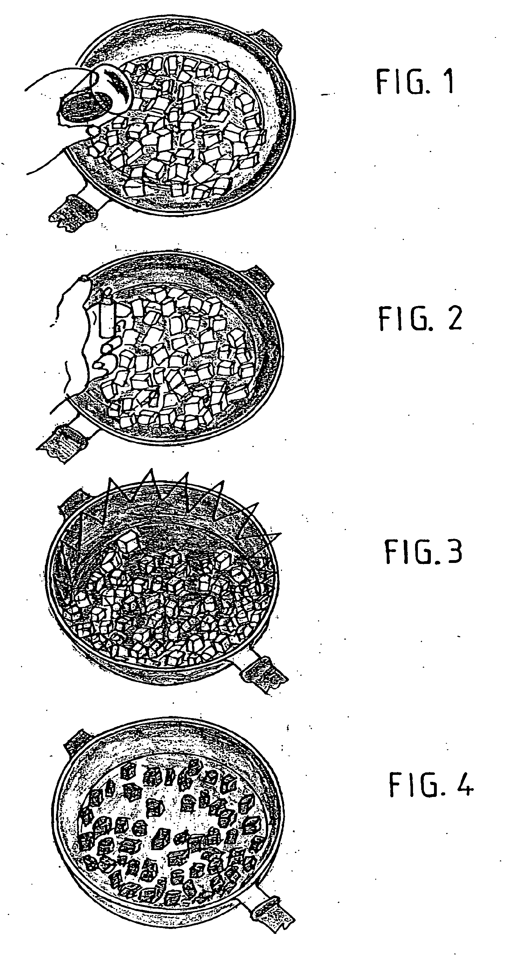

La variante de base du nouveau procédé de cuisson selon l'invention consiste à débiter l'aliment en morceaux que l'on dépose dans un récipient, à verser sur l'aliment un volume prédéterminé V d'éthanol dénaturé titrant plus de 80° (figure 1), puis à enflammer l'éthanol (figure 2 et 3).

Lorsque l'éthanol est complètement consommé, la combustion s'arrête et les morceaux d'aliment sont saisis instantanément et entièrement (figure 4).

A titre indicatif pour cuire 400 g de viande ou de saucisses ou de crustacés on peut prévoir un volume V de 10 cl d'éthanol titrant 95°.

La combustion de l'éthanol dure plusieurs minutes et produit une flamme bleue à jaune de 20 à 30 cm voire 50 cm si on agite le récipient.

La cuisson est réalisée par le contact direct de l'aliment avec le combustible et avec la flamme ce qui est totalement nouveau par rapport aux modes de cuisson traditionnels et sans production de matières toxiques comme c'est le cas avec les grillades au barbecue.

En effet, la combustion de l'éthanol ne produit que de l'eau et du gaz carbonique CO₂.

Selon une variante du procédé de cuisson, on peut utiliser de l'éthanol parfumé ou aromatisé obtenu de différentes manières :
- par adjonction de poivre ou d'épices ou d'aromates à l'éthanol de cuisson,
- par infusion d'herbes aromatiques (par exemple thym, romarin, etc...) ou par macération de plantes fraîches (par exemple : poivrons, ail etc...) dans l'éthanol, et préalablement à la cuisson de manière à ce que l'éthanol capture les arômes. L'infusion ou la macération peut être rapide, de l'ordre de 24 à 48 h par exemple, et une fois aromatisé, l'éthanol peut être utilisé, après filtration ou non, pour cuire les aliments selon le procédé qui vient d'être décrit, .
- par aromatisation grâce à des extraits aromatiques de type industriel (essences, huiles concentrées par exemple).

Le procédé de cuisson selon l'invention convient particulièrement aux viandes, brochettes, saucisses, poissons ou crustacés débités ou non en morceaux selon leur taille, ainsi qu'aux brochettes. Par exemple et non limitativement les morceaux ont un volume contenu dans des cubes de 1,5 à 2,5 cm de côté. Bien entendu, les aliments peu volumineux (friture, crevettes, etc...) ou coupés en tranches n'ont pas besoin d'être débités.

On utilise de préférence de l'éthanol titrant plus de 80° et préférentiellement titrant environ 95° d'alcool.

Cependant il est clair que si un alcool titrant moins de 80° n'est pas propice à la cuisson il garde malgré tout son pouvoir d'extraction des arômes, et il pourrait malgré tout être utilisé pour préparer les concentrés destinés à l'assemblage du combustible final.

A titre d'exemple, dix litres d'éthanol titrant 80° sont utilisés pour extraire les arômes de dix kilos de piments antillais extra forts. Ce mélange appelé alcoolat est mélangé à 200 litres d'alcool titrant 96° pour donner 210 litres d'alcool titrant 95,23°.

Les avantages du procédé sont notamment les suivants:
- conservation des sucs et jus de l'aliment car la chaleur enveloppe entièrement les morceaux,
- cuisson sans graisse ajoutée,
- cuisson sans odeur,
- cuisson rapide (1 à 5 mn),
- cuisson économe en combustible (environ 1l d'éthanol à 95° pour 4 kg d'aliment),
- utilisation d'alcool dénaturé, c'est à dire impropre à la consommation directe (par adjonction des aromates) et pour lequel la taxation est beaucoup plus faible,
- simplicité des moyens utilisés,
- capacité de l'alcoolat à transmettre les parfums et arômes après brûlage qui permet d'envisager une gamme de parfums et de goûts variés,
- possibilité d'utiliser ce procédé pour saisir une viande, débitée ou non, sans la cuire,
- fort dégagement de chaleur ayant un effet bactéricide.
   Enfin on rappelle que l'éthanol dénaturé est de l'alcool éthylique rendu impropre à la consommation selon la législation en vigueur et obtenu par fermentation de plantes sucrées. L'invention offre donc un nouveau débouché commercial de l'éthanol dénaturé en particulier mais non limitativement celui obtenu à partir de la canne à sucre, de la betterave etc...

L'invention consiste donc à utiliser le PCI (pouvoir calorifique) de l'éthanol pour cuire des aliments par contact direct entre l'aliment et l'éthanol en combustion.

Cette combustion est par conséquent effectuée en milieu liquide (éthanol) et s'arrête dès que le dit liquide est totalement épuisé par la combustion évitant toute formation de résidus toxiques.

On décrit à présent un appareil pour un exemple de mise en oeuvre du procédé de cuisson selon l'invention.

Cet exemple non limitatif de mise en oeuvre concerne la cuisson de brochettes ou d'aliments conditionnés en boyau, par exemple des saucisses.

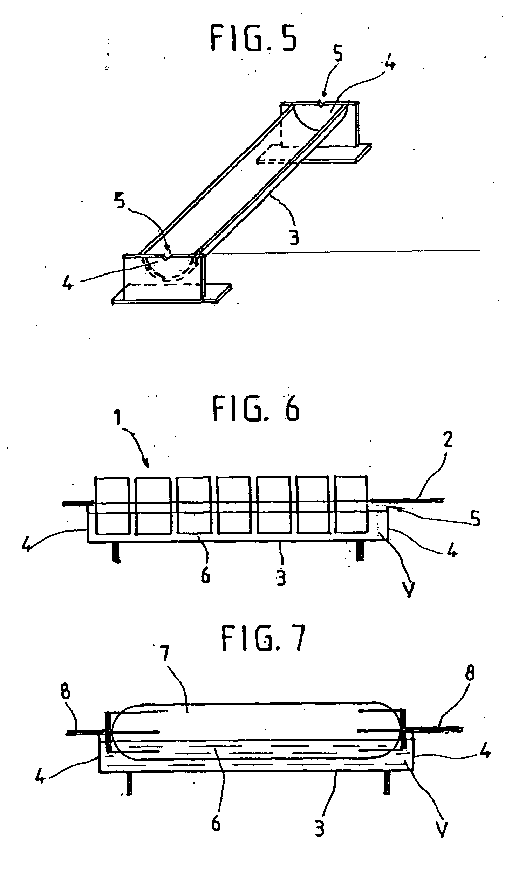

On décrit ci-après la cuisson de brochettes en références aux figures 5 et 6.

Les brochettes (1) sont des brochettes traditionnelles formées de cubes de viandes, légumes, poissons, abats, etc enfilés sur un axe ou une pique (2) et qui peuvent avoir-une-taille hors des standards habituels (1 kilogramme, voir plus).

A l'inverse de la cuisson traditionnelle au grill où les brochettes sont soumises à un mode de cuisson par rayonnement de la chaleur, le mode de cuisson à l'éthanol permet de cuire les aliments contenus sur la brochette par contact direct avec l'éthanol enflammé.

Pour ce faire la brochette est positionnée à l'intérieur d'un demi-tube (3), d'acier inoxydable ou d'un matériau susceptible de répondre tant au niveau de la température que sur le plan de la qualité sanitaire.

Le demi-tube (3) dans laquelle la brochette est positionnée est bouché à chaque extrémité par des plaques (4) demi circulaire dans le même matériel que le demi tube de façon à former une auge étanche.

Chaque extrémité du demi cylindre comporte une encoche centrale (5) qui va permettre de guider la brochette de façon à ce que la brochette soit bien centrée.

Le demi cylindre a un diamètre et une longueur déterminés par la taille de la brochette à cuire.

Le développement des futurs appareils utilisant ce procédé de cuisson implique dès aujourd'hui que les demi cylindres seront amovibles et de différentes tailles tant par le diamètre que par la longueur.

Concernant la cuisson proprement dite, la brochette d'aliments à cuire est positionnée dans un demi cylindre d'un diamètre et d'une longueur adaptés à la brochette.

Par adapté, il s'entend que la brochette doit prendre une place maximale dans le demi cylindre tout en pouvant tourner librement sur elle même sans pour autant toucher le demi cylindre, ce qui pourrait empêcher la rotation de la brochette.

Une fois que l'opérateur s'est assuré que la brochette est libre de pouvoir tourner sur elle-même, l'opérateur remplit le demi cylindre d'un volume (6) d'éthanol aromatisé déterminé par la taille de la brochette ainsi que par le degré de cuisson désiré, par exemple 2 à 3 cm³.

L'opérateur procède à la mise à feu de l'éthanol soit manuellement soit par un moyen automatique.

Une fois l'éthanol allumé, l'opérateur met la brochette en rotation soir manuellement soit par un moyen automatique, à cet effet on peut prévoir une motorisation sur le pique (2).

La brochette en rotation va alors s'imbiber d'éthanol dans la partie basse du demi cylindre et va entrer en combustion au contact de l'oxygène de l'air lorsque la partie supérieure de la brochette sera non immergée. Lorsque la combustion de l'éthanol est terminée, la brochette est cuite.

Il est à noter que le développement à venir de ce type de matériel aboutira à des appareils permettant de cuire plusieurs brochettes de différentes tailles en même temps, en prévoyant plusieurs demi cylindres sur le même appareil.

De plus, comme dans la cuisine traditionnelle il est possible de cuire de cette façon les saucisses (7) en remplaçant l'axe ou pique (2) par deux mini piques à griffes d'embrochage (8) (voir figure 7).

Enfin il est certain que des améliorations peuvent être apportées au demi cylindre de façon à pouvoir fournir l'éthanol en continu ou à pouvoir améliorer la forme de demi cylindres par la combinaison de demi cylindres plus petits destinés à collecter les graisses issues de la cuisson à l'éthanol.

Dans tous les cas, il est préférable que l'espace entre la brochette (ou la saucisse) et son contenant en forme de demi tube fermé soit faible, de l'ordre de 1 à 3 mm de façon à augmenter la hauteur d'alcool pour un volume de cuisson prédéterminé et de façon à réduire la hauteur des flammes.

## Revendications

1. Procédé de cuisson d'un aliment disposé dans un récipient, dans lequel:
- on verse sur l'aliment un volume V prédéterminé d'éthanol dénaturé par adjonction d'aromates, titrant au moins 80°,
- on enflamme l'éthanol et on le laisse brûler en totalité.

2. Procédé selon la revendication 1, **caractérisé en ce que** l'éthanol titre préférentiellement entre 94° et 96°.

3. Procédé selon l'une des revendications 1 2, **caractérisé en ce qu'**on parfume préalablement l'éthanol par macération ou infusion d'ingrédients.

4. Procédé selon la revendication 3, **caractérisé en ce que** les ingrédients sont choisis dans l'ensemble (herbes aromatiques, plantes fraîches, épices, condiments, légumes, fleurs).

5. Procédé selon l'une des revendications 1 à 4, **caractérisé en ce qu'**on débite préalablement l'aliment en morceaux.

6. Procédé selon l'une des revendications 1 à 5, **caractérisé en ce que** les morceaux ont un volume contenu approximativement dans des cubes de 1,5 à 2,5 cm de côté.

7. Procédé selon l'une des revendications 1 à 6, **caractérisé en ce que** le volume V est déterminé par rapport à la masse d'aliment à cuire selon une proportion de 11 d'éthanol à 95° pour environ 4 kg d'aliment.

8. Appareil pour la cuisson d'aliments pour la mise en oeuvre du procédé selon l'une des revendications 1 à 7 comprenant au moins un demi tube (3) bouché à chaque extrémité par des demi plaques (4) en forme de demi disques comportant chacune une encoche centrale (5) dans laquelle est guidée une pique (2) ou sont guidées des demi piques(8) maintenant les aliments à cuire, et **caractérisé en ce que** l'espace entre l'aliment et le demi tube est de l'ordre de 1 à 3 mm.

9. Appareil selon la revendication (9), **caractérisé en ce qu'**il comporte un moyen automatique de rotation de la pique ou des demi piques.

10. Appareil selon l'une des revendications 8 à 9, **caractérisé en ce qu'**il comporte des moyens destinés à collecter des graisses.

11. Appareil selon l'une des revendications 8 à 10, **caractérisé en ce qu'**il comporte des moyens d'alimentation en continu de l'éthanol de cuisson.

## Claims

1. Method of cooking a food item disposed in a container, in which method:
- a predetermined volume V of ethanol, denatured by the addition of spices and herbs and titering at least 80°, is poured on the food item, and
- the ethanol is ignited and left to bum totally.

2. Method according to claim 1, **characterised in that** the ethanol preferably titers between 94° and 96°.

3. Method according to one of claims 1 to 2, **characterised in that** the ethanol is previously perfumed by macerating or infusing ingredients.

4. Method according to claim 3, **characterised in that** the ingredients are selected from the group (aromatic herbs, fresh plants, spices, condiments, vegetables, flowers).

5. Method according to one of claims 1 to 4, **characterised in that** the food item is previously cut-up into pieces.

6. Method according to one of claims 1 to 5, **characterised in that** the pieces have a volume approximately contained in cubes of side 1.5 to 2.5 cm.

7. Method according to one of claims 1 to 6, **characterised in that** the volume V is determined relative to the food item mass to be cooked according to a proportion of 11 of 95° ethanol for about 4 kg of food item.

8. Apparatus for the cooking of food items for accomplishing the method according to one of claims 1 to 7, said apparatus comprising at least one half tube (3), blocked at each end by half-plates (4) in the form of half-discs, each including a central notch (5) in which is guided a spike (2), or in which are guided half-spikes (8) holding the food items to be cooked, and **characterised in that** the space between the food item and the half-tube is in the order of 1 to 3 mm.

9. Apparatus according to claim 9, **characterised in that** it includes an automatic means for rotating the spike or the half-spikes.

10. Apparatus according to one of claims 8 to 9, **characterised in that** it includes means intended to collect the fat.

11. Apparatus according to one of claims 8 to 10, **characterised in that** it includes means for continuously feeding the cooking ethanol.

## Patentansprüche

1. Verfahren zum Kochen eines in einem Behälter angeordneten Nahrungsmittels, bei dem:
- auf das Nahrungsmittel ein vorbestimmtes Volumen denaturieren Ethanols, das mindestens 80° titriert, unter Beigabe von Aromaten geleert wird,
- das Ethanol entzündet und zur Gänze verbrannt wird.

2. Verfahren nach Anspruch 1, **dadurch gekennzeichnet, dass** das Ethanol vorzugsweise zwischen 94° und 96° titriert.

3. Verfahren nach einem der Ansprüche 1 bis 2, **dadurch gekennzeichnet, dass** das Ethanol vorher durch Mazeration oder Infusion von Ingredienzien parfümiert wird.

4. Verfahren nach Anspruch 1, **dadurch gekennzeichnet, dass** die Ingredienzien aus der Gesamtheit (aromatische Kräuter, frische Pflanzen, Gewürze, Würzstoffe, Gemüse, Blumen) ausgewählt werden.

5. Verfahren nach einem der Ansprüche 1 bis 4, **dadurch gekennzeichnet, dass** das Nahrungsmittel vorher in Stücke geteilt wird.

6. Verfahren nach einem der Ansprüche 1 bis 5, **dadurch gekennzeichnet, dass** die Stücke ein Volumen aufweisen, das annähernd in Kuben von 1,5 bis 2,5 cm Seitenlänge enthalten ist.

7. Verfahren nach einem der Ansprüche 1 bis 6, **dadurch gekennzeichnet, dass** das Volumen V in Bezug zur Masse des zu kochenden Nahrungsmittels in einem Verhältnis von 11 Ethanol mit 95° für ungefähr 4 kg Nahrungsmittel bestimmt wird.

8. Gerät zum Kochen von Nahrungsmitteln für den Einsatz des Verfahrens nach einem der Ansprüche 1 bis 7, umfassend mindestens ein halbes Rohr (3), das an jedem Ende durch halbe Platten (4) in Form von halben Scheiben verschlossen ist, die jeweils eine zentrale Kerbe (5) umfassen, in der ein Spieß (2) oder halbe Spieße (8) geführt werden, die die zu kochenden Nahrungsmittel halten, **dadurch gekennzeichnet, dass** der Raum zwischen dem Nahrungsmittel und dem halben Rohr ungefähr 1 bis 3 mm beträgt.

9. Gerät nach Anspruch (9), **dadurch gekennzeichnet, dass** es ein Mittel zum automatischen Drehen des Spießes oder der halben Spieße umfasst.

10. Gerät nach einem der Ansprüche 8 bis 9, **dadurch gekennzeichnet, dass** es Mittel umfasst, die dazu bestimmt sind, das Fett zu sammeln.

11. Gerät nach einem der Ansprüche 8 bis 10, **dadurch gekennzeichnet, dass** es Mittel zur kontinuierlichen Zuführung von Kochethanol umfasst.
